Europäisches Patentamt

European Patent Office

Office européen des brevets

(11) Veröffentlichungsnummer: **0 243 594**

**A2**

(12) **EUROPÄISCHE PATENTANMELDUNG**

(21) Anmeldenummer: **87102278.6**

(22) Anmeldetag: **18.02.87**

(51) Int. Cl.⁴: **B65G 53/38**

(30) Priorität: **30.04.86 DE 3614680**

(43) Veröffentlichungstag der Anmeldung:
**04.11.87 Patentblatt 87/45**

(84) Benannte Vertragsstaaten:
**CH DE ES FR GB IT LI NL**

(71) Anmelder: **Sikufilt Beteiligungs GmbH**
**Metallweberstrasse 46**
**D-5160 Düren(DE)**

(72) Erfinder: **Schoeller, Jochen, Dipl.-Ing.**
**Stürtzstrasse 25**
**D-5160 Düren(DE)**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**D-5000 Köln 1(DE)**

(54) **Platte, insbesondere zum Herstellen von Fluidisiereinrichtungen und Verfahren zu ihrer Herstellung.**

(57) Platte, insbesondere zum Herstellen von Fluidisiereinrichtungen, die aus einem gewalzten Drahtgewebe besteht, bei dem die innenliegenden Drähte im wesentlichen geradlinig durchlaufende Drahtbündel sind, deren Einzeldrähte sich verformen und in die Zwickel zwischen den sich kreuzenden Einzeldrähten eintreten, wenn das Gewebe in Längsrichtung seiner außenliegenden Drähte gewalzt wird und hierdurch zusammengedrückt und verfestigt wird.

FIG.2

## Platte, insbesondere zum Herstellen von Fluidisiereinrichtungen und Verfahren zu ihrer Herstellung

Die Erfindung betrifft eine Platte, insbesondere zum Herstellen von Fluidisiereinrichtungen, wie Förderrinnen für staubförmige Güter, bestehend aus einem Drahtgewebe mit außenliegenden Drähten, innenliegenden Drähten und durch Walzen des Gewebes verkleinerten Maschenöffnungen. Sie hat auch ein Verfahren zum Herstellen einer solchen Platte zum Gegenstand.

Für den Bau von Behältnissen und Anlagen zum Auflockern und Fördern von fluidisierten, pulverförmigen festen Stoffen, aber auch zum Filtrieren oder Zentrifugieren von flüssigen Stoffen, werden Drahtgewebeplatten benötigt, die einerseits eine gute Durchlässigkeit und andererseits eine hohe mechanische Festigkeit und eine möglichst glatte Oberfläche haben, bei denen jedoch die Öffnungen für den Luft-oder Flüssigkeitsdurchlaß so klein sind, daß auch feinste Stäube oder Festbestandteile von Aufschwemmungen nicht hindurchtreten können.

Staubförmige Feststoffe mit sehr kleiner Partikelgröße in der Größenordnung von wenigen $\mu$ m, wie Getreidemehl, Zement oder auch Kunststoffe in sehr feinkörniger Form, werden in Rinnen transportiert, denen von unten her durch eine Vielzahl feinster Öffnungen Luft zugeführt wird. Die staubförmigen Feststoffe verhalten sich dann wie eine Flüssigkeit und fließen auch eine nur flachgeneigte Rinne entlang. Boden und Seitenwände dieser Rinne müssen hierbei natürlich eine besonders glatte Oberfläche haben, auf der die pulverförmigen Stoffe leicht entlanggleiten können. Damit die Stäube nicht durch die Wände und den Boden der Rinne hindurchtreten können, müssen die Öffnungen in diesen Flächen klein sein. Andererseits müssen aber möglichst viele Öffnungen vorhanden sein, damit bei nur geringem Luftüberdruck genügend Luft zum Fluidisieren in die zu transportierenden pulverförmigen Feststoffe eingeblasen werden kann.

Es gibt bereits für den Bau von Fluidisierungseinrichtungen Gewebeplatten, die aus mehreren, dünnen Drahtgeweben bestehen, die durch Walzen und Sintern miteinander verbunden sind. Das hierdurch entstandene Erzeugnis, das wie eine Blechplatte bearbeitet werden kann, aber infolge seiner Gewebestruktur porös ist, erfordert zu seiner Herstellung viele Arbeitsgänge und ist infolge seines komplizierten Aufbaus außerordentlich teuer in der Herstellung. Es ist auch nur in begrenzten Abmessungen herstellbar, so daß größere Tafeln nur durch Zusammenschweißen kleinerer Einzelstücke gefertigt werden können.

Zur Herstellung von Sieben sind auch schon Drahtgewebe bekannt, deren Maschenöffnungen durch Walzen des Gewebes verkleinert sind (DE-AS 1 236 182). Diese bekannten gewalzten Siebgewebe sind jedoch als Platten für den Bau von Fluidisiereinrichtungen nicht verwendbar, da entweder die mechanischen Festigkeitswerte wie Zug-, Druck-und Biegezugfestigkeit nicht ausreichen, wenn die Gewebe aus dünnen Drähten hergestellt sind, oder die Maschenweite für Fluidisierungszwecke viel zu groß wird, wenn dickere Drähte verwendet werden, da in den Zwickeln des Gewebes dann zu große Öffnungen verbleiben.

Aufgabe der Erfindung ist es, ein einfach und billig herzustellendes Material insbesondere für den Bau von Fluidisiereinrichtungen zu schaffen, bei dem durch einfaches Walzen eines Drahtgewebes dessen Maschenweite auf die gewünschte Größe verkleinert werden kann und gleichzeitig gleichwohl die hohen Festigkeitseigenschaften der gesinterten Gewebeplatten wenigstens annähernd erreicht werden.

Diese Aufgabe wird mit der Erfindung dadurch gelöst, daß die außenliegenden Drähte des Gewebes monofile Drähte sind, während die innenliegenden Drähte aus im wesentlichen geradlinig durchlaufenden Drahtbündeln bestehen.

Unter "geradlinig durchlaufenden Drahtbündeln" wird eine Vielzahl von im Gewebe ungekröpft durchlaufenden dünnen Drähten verstanden. Hierbei können die dünnen Einzeldrähte parallel zueinander verlaufen, vorzugsweise werden die Drähte jedoch miteinander verseilt oder drilliert. Um die erforderlichen mechanischen Festigkeitswerte zu erreichen, ist es zweckmäßig, wenn die Gesamtdicke des innenliegenden Drahtbündels mindestens zweimal so groß ist wie der Durchmesser der dünnen außenliegenden Einzeldrähte.

Für das Gewebe werden in der Regel Metalldrähte verwendet. Es ist jedoch auch möglich, für die außenliegenden monofilen Drähte oder für die innenliegenden Drahtbündel oder für beide Kunststoffdrähte zu verwenden.

Die Platte nach der Erfindung erlangt nach dem Walzen des Drahtgewebes annähernd das Aussehen und die Festigkeit eines porösen Bleches und kann wie ein solches bearbeitet werden. Da die innenliegenden Drähte aus einem Bündel von mehreren, dünnen, in Längsrichtung durchlaufenden Drähten bestehen, können sie sich in der Bindung beim Walzen seit lich verschieben und die Zwickel an den Kreuzungspunkten der außenliegenden Drähte ausfüllen, so daß sich ein sehr dichtes Gewebe ergibt, das auch für feinste Stäube undurchlässig ist, aber Luft in ausreichender Menge und in sehr fein verteilter Form hindurchtreten läßt. Durch den Walzprozeß wird die Oberfläche der Gewebeplatte sehr glatt und die Struktur so verfestigt, daß das Drahtgewebe den Charakter eines Bleches annimmt, das auch in großen Abmessungen gefertigt und verarbeitet werden kann.

Besonders vorteilhaft ist es, wenn die Drähte der innenliegenden Drahtbündel aus einem anderen Material bestehen als die außenliegenden, monofilen Drähte. Insbesondere kann es zweckmäßig sein, für die Drähte der innenliegenden Drahtbündel ein weicheres Metall, beispielsweise Kupfer, Messing, Nickel oder Aluminium zu verwenden als für die außenliegenden, monofilen Drähte, die zur Erzielung einer möglichst großen Oberflächenhärte möglichst aus Stahldrähten bestehen sollten.

Falls das Material bei höheren Temperaturen eingesetzt werden soll, ist es vorteilhaft, die Drähte aus einem Material mit geringer Wärmedehnung z.B. aus einer Kupfer-Nickel-Legierung herzustellen.

Die innenliegenden Drahtbündel können die Kettdrähte des Gewebes sein. Vorzugsweise sind es jedoch die Schußdrähte, die als innenliegende Drahtbündel ausgeführt werden. Um eine möglichst glatte Oberfläche zu erzielen, ist es zweckmäßig, eine Köperbindung vorzusehen.

Beim Herstellen einer Platte nach der Erfindung wird zweckmäßig so vorgegangen, daß nach dem Verweben oder monofilen Drähte und Drahtbündel das Gewebe in Längsrichtung seiner außenliegenden, monofilen Drähte gewalzt wird. Je nach Art des verwendeten Drahtmaterials kann das Gewebe auch in mehreren Durchgängen zwischen Walzenpaaren gewalzt werden. Um Materialverfestigungen durch das Walzen zu beseitigen, ist es zweckmäßig, dem Gewebe nach dem Walzen und gegebenenfalls auch zwischen den einzelnen Walzvorgängen eine Wärmebehandlung zuteil werden zu lassen und beispielsweise zu glühen.

Weitere Merkmale und Vorteile der Erfindung ergeben sich aus der nachfolgenden Beschreibung und der Zeichnung, in der eine bevorzugte Ausführungsform der Erfindung an einem Beispiel näher erläutert ist. Es zeigt:

Fig. 1 eine Platte nach der Erfindung vor dem Walzen des Gewebes in einem Teil-Längsschnitt durch die Schußdrähte,

Fig. 2 die Platte nach der Erfindung nach dem Walzvorgang in einer der Fig. 1 entsprechenden Darstellung,

Fig. 3 den Gegenstand der Fig. 2 in einem Teil-Querschnitt nach Linie III-III

Fig. 4 die Platte nach Fig. 2 in einer Teil-Draufsicht.

In den Zeichnungen ist mit 10 eine Drahtgewebeplatte mit Köperbindung bezeichnet, deren außenliegende Drähte 11 monofile Metalldrähte sind, welche die Kette des Gewebes bilden. Die von den außenliegenden Drähten 11 eingebundenen, innenliegenden Schußdrähte 12, die im Gewebe geradlinig, d.h. ungekröpft, durchlaufen, bestehen aus Drahtbündeln, deren dünne Einzeldrähte 13 bei dem hier dargestellten Ausführungsbeispiel drilliert oder miteinander verseilt sind.

Während die außenliegenden Drähte 11 monofile Stahldrähte sind, bestehen die Drahtbündel oder Litzen 12 aus dünnen Nickeldrähten.

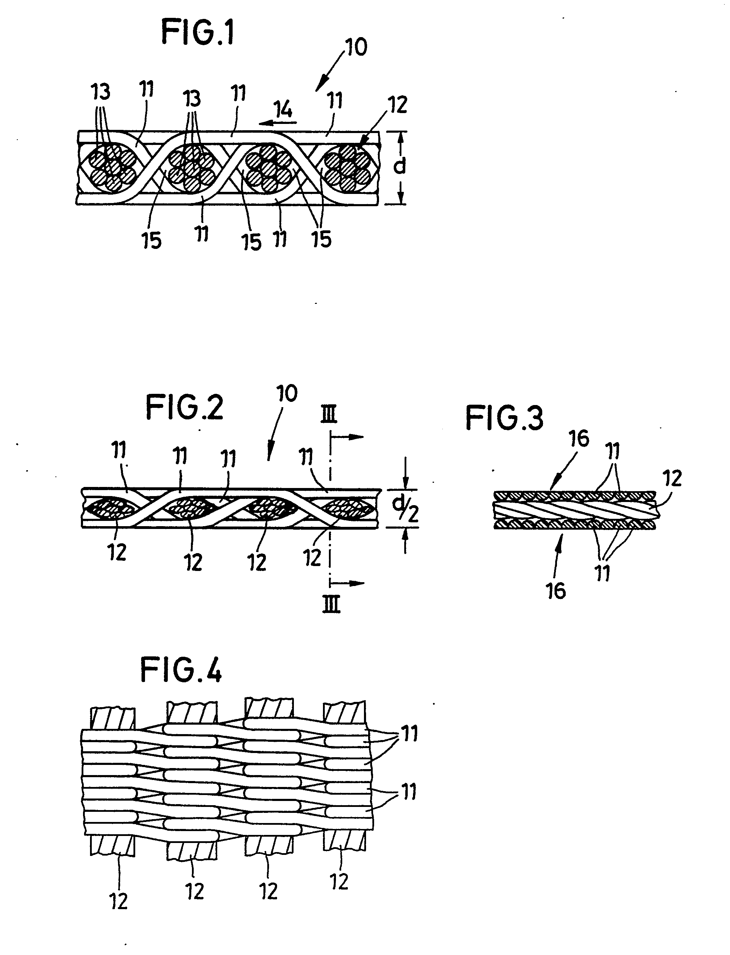

Nach dem Weben hat das Drahtgewebe 10 die in Fig. 1 dargestellte Form. Danach wird das Gewebe in Längsrichtung 14 seiner außenliegenden, monofilen Drähte 11 in einem oder mehreren Durchgängen zwischen Walzenpaaren gewalzt und hierdurch auf weniger als die Hälfte seiner ursprünglichen Dicke $\underline{d}$ gebracht, so daß es den in Fig. 2 dargestellten Längsschnitt annimmt. Man erkennt, daß das Gewebe sich durch den Walzvorgang nur unwesentlich längt und daß die im Umriß zunächst runden Drahtbündel eine im Querschnitt spitzovale Form annehmen, wobei sich die Einzeldrähte 13 im Querschnitt verformen und die unmittelbar nach dem Webvorgang im Gewebe noch vorhandenen offenen Zwickel 15 an den Kreuzungsstellen zwischen den außenliegenden Drähten ausfüllen. Da sich diese außenliegenden Drähte nicht nur im Längsschnitt kreuzen (Fig. 2), sondern auch im Grundriß übereinanderlaufen (Fig. 4), hat die fertiggewalzte Gewebeplatte keine von oben nach unten durchgehende Öffnung, durch welche feinkörnige Feststoffe hindurchfallen könnten. Außerdem werden die Oberflächen 16 der dicht nebeneinanderliegenden Außendrähte 11 durch den Walzvorgang abgeflacht und bilden eine praktisch geschlossene Oberfläche, die nur sehr feine Spalten und Löcher hat, durch die zwar Luft oder andere Gase hindurchtreten können, die aber keinerlei Feststoffe oberhalb der geforderten Korngröße durchfallen läßt. Die Größe der Öffnungen kann durch die Walzung beeinflußt werden.

Die so gewalzte Drahtgewebeplatte kann anschließend noch einer Wärmebehandlung unterworfen werden, um innere Spannungen zu beseitigen, die durch den Web-und Walzvorgang hervorgerufen wurden.

Durch die erfindungsgemäße Konstruktion erlangt die Drahtgewebeplatte nach dem Walzvorgang eine hohe Festigkeit und annähernd die Steifigkeit und Eigenschaften einer Blechplatte, so daß sie mit besonderem Vorteil für die Herstellung von Rinnen, Rohren und Behältern zum Fluidisieren von pulverförmigen Feststoffen verwendet werden kann. Obgleich die innen-und außenliegenden Drähte bzw. Drahtbündel nicht miteinander verschweißt oder versintert sind, ist es möglich, das Gewebe wie eine Blechplatte zu bearbeiten und untereinander oder mit anderen Blechen zu verschweißen.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise ist es möglich, die Kettdrähte als geradlinig durchlaufende Drahtbündel auszubilden oder andere Gewebebindungen wie eine Fünfschaftbindung vorzusehen. Für spezielle Anwendungszwecke können die Drähte, insbesondere die Einzeldrähte der Drahtbündel auch Kunststoffdrähte sein. Die Verwendung von Kunststoffdrähten empfiehlt sich insbesondere dann, wenn das Drahtgewebe nach der Erfindung mit Säuren in Verbindung kommt, welche Metalle stark angreifen.

**Ansprüche**

1. Platte, insbesondere zum Herstellen von Fluidisiereinrichtungen, bestehend aus einem Drahtgewebe mit außenliegenden Drähten, innenliegenden Drähten und durch Walzen des Gewebes verkleinerten Maschenöffnungen, **dadurch gekennzeichnet,** daß die außenliegenden Drähte (11) monofile Drähte sind und die innenliegenden Drähte aus im wesentlichen geradlinig durchlaufenden Drahtbündeln (12) bestehen.

2. Platte nach Anspruch 1, **dadurch gekennzeichnet,** daß die Drahtbündel (12) aus mehreren dünnen, parallellaufenden Drähten (13) bestehen.

3. Platte nach Anspruch 1, **dadurch gekennzeichnet,** daß die Drahtbündel (12) aus verseilten oder drillierten, dünnen Drähten (13) bestehen.

4. Platte nach einem der Ansprüche 1 bis 3, **dadurch gekennzeichnet,** daß die Drähte (13) der innenliegenden Drahtbündel (12) aus einem anderen Material bestehen als die außenliegenden monofilen Drähte (11).

5. Platte nach einem der Ansprüche 1 bis 4, **dadurch gekennzeichnet,** daß die Drähte (13) der innenliegenden Drahtbündel (12) aus einem weicheren Metall bestehen als die außenliegenden, monofilen Drähte (11).

6. Platte nach einem der Ansprüche 1 bis 5, **dadurch gekennzeichnet,** daß die innenliegenden Drahtbündel (12) die Schußdrähte des Gewebes sind.

7. Platte nach einem der Ansprüche 1 bis 6, **gekennzeichnet durch** eine Köperbindung.

8. Verfahren zum Herstellen einer Platte nach einem der Ansprüche 1 bis 7, **dadurch gekennzeichnet,** daß nach dem Verweben der monofilen Drähte und Drahtbündel das Gewebe in Längsrichtung seiner außenliegenden monofilen Drähte gewalzt wird.

9. Verfahren nach Anspruch 8, **dadurch gekennzeichnet,** daß das Gewebe in mehreren Durchgängen zwischen Walzenpaaren gewalzt wird.

10. Verfahren nach Anspruch 8 oder 9, **dadurch gekennzeichnet,** daß das Gewebe nach dem Walzen geglüht wird.

11. Verfahren zur Verwendung einer Platte nach einem der Ansprüche 1 bis 7 für die Herstellung von Behältnissen und Fördermitteln in denen staubförmige Stoffe fluidisiert werden.

## FIG.1

## FIG.2

## FIG.3

## FIG.4